# EUROPEAN PATENT SPECIFICATION

(11) **EP 3 890 229 B1**
(45) Date of publication and mention of the grant of the patent: **03.09.2025**
(21) Application number: 20167054.4
(22) Date of filing: 31.03.2020
(51) Int. Cl.: H04L 5/00, H04B 10/278, H04J 3/06, H04L 1/00, H04Q 11/00, H04L 69/323

(54) **A SERIAL RECEIVER AND A METHOD THEREFOR**
SERIELLER EMPFÄNGER UND VERFAHREN DAFÜR
RÉCEPTEUR EN SÉRIE ET PROCÉDÉ ASSOCIÉ

(43) Date of publication of application: 06.10.2021
(73) Proprietor: Nokia Solutions and Networks Oy, 02610 Espoo (FI)
(72) Inventor: Gadeyne, Koen, 2018 Antwerpen (BE)
(74) Representative: IP HILLS NV

(56) References cited:
- EP-A1- 2 007 040
- US-A1- 2007 140 694

## Description

### Technical Field

Various example embodiments relate to a physical layer, PHY, circuitry and medium access control, MAC, circuitry. Further example embodiments relate to a serial receiver and a method therefor.

### Background

In serial communication, the data is sent sequentially, one bit at a time, over a communication channel or a communication bus which may be a copper or an optical cable. Serial communication provides improved signal integrity and transmission speeds. Because of these qualities, serial communication is now also used for short-distance communications in high-speed serial connections between Printed Circuit Boards, PCBs, or between different pieces of equipment located on the same rack or within a geographic location.

Serial signals transmitted over the serial connections, however, experience signal distortions that worsen with higher speeds and/or longer distances. Serial receivers, therefore, comprise various signal processing modules to clean up or recover the bits from the received serial signal.

US2007140694A1 discloses a method and apparatus for receiving burst data in an OLT of an EPON are provided. The method includes the steps of: a) receiving burst data from the plurality of ONUs; b) generating a multipoint control protocol (MPCP) LOS signal for reducing a synch time of the burst data; c) reducing the synch time in response to generation of the MPCP LOS signal; and d) recovering the received burst data by performing a code-group sort in a period where the MPCP LOS signal is not generated.

EP2007040A1 discloses a receiver that converts an analog signal, derived from light pulses in a GPON fiber optic system, to clean digital electrical signals. A photodetector and transimpedance amplifier (TIA) convert the light pulses to analog electrical signals. A reset signal generated by a media access controller (MAC) in the GPON system signifies the start of a new burst of data. The receiver has a switchable low pass filter that establishes the threshold voltage for determining whether the analog signal is a logical 1 or a logical 0. At the very start of a new burst, the low pass filter has a fast time constant to quickly establish the threshold voltage for the burst. At a later time during the burst, the low pass filter is switched to have a slow time constant to create a relatively stable threshold voltage.

### Summary

Amongst others, an object of embodiments of the present disclosure is to provide physical layer, PHY, circuitry for a serial receiver with improved performance. Another object of embodiments of the present disclosure is to provide a medium access control, MAC, circuitry for enabling a serial receiver with improved performance.

The scope of protection sought for various embodiments of the invention is set out by the independent claims.

The embodiments and features described in this specification that do not fall within the scope of the independent claims, if any, are to be interpreted as examples useful for understanding various embodiments of the invention.

This object is achieved, according to a first example aspect of the present disclosure, by a physical layer, PHY, circuitry according to claim 1.

Serial burst transmission is used in point-to-multipoint high-speed serial communications, where a central terminal, CT, communicates with multiple network terminals, NTs which transmit serial data during specific time intervals with no dummy data transmitted in between. During the idle time, i.e. the gap between the serial signal bursts, the signal processing circuitry continues to compensate for the non-idealities in the received signal, i.e. noise, by adjusting its configuration. As the received signal is a noisy signal, the signal processing circuitry will de-tune as it tries to compensate for the distortions in the noisy signal. Thus, when a new burst is received, the signal processing circuitry needs to recover from the de-tuned state fast enough to be able to clean up the serial signal burst and recover the data bitstream without errors.

The problem becomes even worse when transmission intervals allocated to the NTs are unused. As the gap between subsequent burst transmissions becomes even longer than the transmission time interval, the signal processing circuitry will de-tune so much that it might not be able to recover from the de-tuned state on time to clean up the serial signal burst and recover the data bitstream.

As one of the functionalities of a MAC layer circuitry is to allocate transmission opportunities to the different NTs, the MAC layer circuitry has the information on the next transmitting NT readily available. By embedding this information in a control signal, the PHY circuitry gains knowledge on when to expect a transmission from the next transmitting NT. The PHY circuitry may thus interrupt the operation of the signal processing circuitry for the duration of the gap between the serial signal bursts. As a result, the signal processing circuitry maintains its current configuration and therefore does not de-tune. The PHY circuitry will thus be shielded from the inter-burst-noise. The signal processing circuitry will be able to reconfigure to the parameters of the newly received serial signal burst fast enough to clean up the serial signal burst, i.e. to receive the preamble correctly and recover the data bitstream correctly. As a result, error-free high-speed operation of the PHY circuitry and therefore of the serial receiver is enabled.

The start and the length of the gap between respective serial signal bursts may be easily embedded in a bitstream. For example, the first bit of a bitstream may indicate the start of the gap between the bursts and the length of the bitstream the length of the gap between the bursts. This way the above information may be easily embedded in the control signal. The PHY circuitry thus does not require any complex decoder circuitry to extract the start and the length of the gap between the respective bursts from the control signal.

The circuitry comprises a decoder configured to decode the start and length of the gap of the bitstream. For example, the bitstream may comprise bits all set to a high logical value. The decoder will extract the first bit of the bitstream to derive the start of the gap between the respective serial signal bursts and the length of the bitstream to derive the length of the gap between the respective serial signal bursts. Upon decoding the start and length of the gap between the serial signal bursts, the circuitry generates an signal which interrupts the operation, i.e. the re-configuration, of the signal processing circuitry at the start of and for the duration of the gap between respective serial signal bursts.

Alternatively, the first bit of the bitstream may be indicative for the start of the gap between the respective serial signal bursts while the remaining bits of the bitstream may encode the length of the gap. The number of bits required for encoding the length information depends on the number of transmitting NTs in the network and on the frequency of burst transmissions. For example, seven bits may be enough for the encoding of the length of the gap between respective serial signal bursts. However, if the network comprises a limited number of NTs, a smaller number of bits may suffice, and vice versa.

According to further embodiments, the bitstream may comprise a first subset of bits encoding the start of the gap between the respective serial signal bursts and a second subset of bits encoding the length of the gap between the respective serial signal bursts. For example, the first few bits in the bitstream may encode the start time of the gap and the remaining bits the length of the gap.

By encoding both the start time and the length of the gap between the respective serial signal bursts in the bitstream, the PHY circuitry is informed of the upcoming gap between the serial signal bursts in advance. This way the processing delay of the decoder to decode this information from the control signal is avoided. As a result, the operation of the signal processing circuitry is interrupted so that the signal processing circuitry maintains its configuration at the start of the gap without any processing delay.

Depending on the required functionality of the signal processing circuitry, the signal processing circuitry may comprise one or more processing modules configured to process the serial signal bursts. By interrupting the operation of one or more of the processing modules, the interrupted processing modules and therefore the signal processing circuitry will maintain their current configuration allowing a quick new burst acquisition.

The processing modules may be at least one of an amplification circuitry, an equalization, EQ, circuitry, and, a clock and data recovery, CDR. For example, in optical networks, the signal processing circuitry of the serial receiver, i.e. an optical line terminal, OLT, may comprise a VGA, an EQ and a CDR connected in series. Furthermore, an eye monitor may be connected in parallel to these processing modules.

A signal processing circuitry, for example, may comprise an amplification circuitry with automatic gain control. Such an amplification circuitry is typically referred to as a variable gain amplifier, VGA. The VGA may be completely off because of a preceding noisy but idle period on the transmission medium. This results in amplitude clipping of the received burst and therefore errors in any subsequent processing modules. Therefore, by interrupting the gain adaptation of the amplification circuitry, i.e. maintaining the current gain point, for the duration of the inter-burst gap, a faster settling of automatic gain control may be achieved, thereby assuring that the serial signal bursts are amplified appropriately and therefore received correctly.

Similarly, a signal processing circuitry may comprise an equalization circuitry. The equalization circuitry may comprise one or more filters which compensate for the frequency-dependent attenuation caused by the communication channel. Thus, by maintaining the current configuration of the equalization circuitry, it is assured that the settling time of the equalization circuitry is minimal and hence the received serial signal bursts are equalized correctly.

Further, a clock and data recovery circuitry generates a local clock with the same frequency and phase as the received serial signal burst. Thereby, by generating a local clock synchronized in frequency and phase with the received upstream burst, the signal processing circuitry will be clocked in sync with the received upstream burst which allows the received serial signal bursts to be received correctly. Thus, by interrupting the operation of the CDR circuitry, i.e. by maintaining its configuration unchanged during the idle time, it is assured that the CDR does not de-tune and thus locks to the clock information embedded in the serial signal burst faster. As a result, the locking time of the CDR circuitry is minimized.

By maintaining the configuration of the respective processing modules the settling time of respective processing modules is minimized. This assures correct and error-free reception of the serial signal bursts from the NTs. As a result, high-speed operation of the PHY circuitry and therefore the serial receiver is enabled.

By taking into account the processing delay of the respective processing modules, the circuitry may interrupt their operation in a more controlled manner. For example, the VGA gain point adaptation may be interrupted immediately upon receipt of the control signal, while the re-configuration of the processing module which is last in the signal processing path, may be interrupted for up to a few microseconds after the receipt of the control signal. This way it is assured that the operation of the various processing modules is interrupted once they have completed the processing of the burst. Similarly, the processing delay of the processing modules may be taken into account when resuming their operation. For example, a processing module may resume operation when the newly received burst has been processed by the preceding processing modules. This further minimizes the settling tome of the respective processing modules.

According to example embodiments, the control signal may be a synchronization signal for indicating a start of the gap between the respective serial signal bursts.

In other words, the control signal transmitted by the MAC circuitry to the PHY circuity may be used as a synchronisation signal. The synchronization signal comprises an indication for the start time of the gap between the serial signal bursts. By embedding the start of the gap between the burst transmission into the control signal, the PHY circuitry and therefore the serial receiver, may interrupt the signal processing circuitry, i.e. its re-configuration, and thus prevent its de-tuning.

Further, in some PHY circuitries, a signal indicating the start of a new burst transmission from the MAC circuitry may already be available for synchronization purposes of the PHY circuitry. Thus, by embedding the start of the gap information into an already existing signal, the existing implementations of PHY circuitries and therefore serial receiver may be easily improved to support burst transmission even at higher transmission speeds and/or longer transmission distances.

According to example embodiments, the control signal may further comprise a length information indicative for the length of the gap between the respective serial signal bursts.

By encoding both the start and the length of the gap between the serial signal bursts, the operation of the PHY circuitry may be synchronized with the burst transmission of the NTs. In particular, by encoding information about the start time of the gap between the respective burst allows notifying the start of the interruption, while encoding the length of the gap between the respective bursts allows indicating the duration of the interruption. The PHY circuitry can then use this information to interrupt the operation of the signal processing circuitry so that the signal processing circuitry maintains its configuration accordingly. By doing so, conventional PHY circuitries and therefore serial receivers may be easily modified to support burst transmission even at higher transmission speeds and/or longer transmission distances.

According to example embodiments, the serial signal bursts are upstream optical signal bursts and wherein the NTs are optical network terminals, ONTs.

Serial burst-mode communication is also used in optical networks (passive or active). Optical networks comprise an Optical Line Terminal, OLT coupled to multiple Optical Network Terminals, ONTs, via an Optical Distribution Network, ODN where each ONT is assigned a time slot to transmit its data towards the OLT. Due to different optical path losses in the ODN and variations in transmitter power of the different ONTs, the signal arriving at the OLT consists of a sequence of bursts with significant amplitude variations and unpredictable phase from one burst to the next. Moreover, in high-speed optical networks, for example, 25 Gbit/s and 50 Gbit/s passive optical networks, the burst transmission is further limited by the significant chromatic dispersion which creates Inter-Symbol Interference, ISI. For this purpose, the PHY circuitry of the OLT comprises a number of signal processing modules, such as a VGA, an EQ circuitry and a CDR circuitry. By interrupting the operating of one or more of these processing modules so that the processing modules maintain their configuration, it is assured the processing modules do not de-tune during the inter-burst gap and that their respective settling time is minimized. Therefore, high-speed operation of the PHY circuitry and therefore the OLT is enabled.

According to example embodiments, the PHY circuitry comprising an electrical input pin configured to receive the control signal from the MAC circuitry. The electrical pin may be an input pin of the PHY circuitry standard interface. For example, the input pin typically used for signalling a start of burst transmission of a respective NT may be re-used. This way a modification of the PHY circuitry standard interface is avoided.

According to a second example aspect a medium access control, MAC, circuitry according to claim 6 is disclosed.

The medium access control, MAC, circuitry is responsible for the determination of the burst allocation map. Therefore, the MAC circuitry holds synchronization information such as the start time and length of the burst transmission of the NTs.

Therefore, by configuring the MAC circuitry to output a control signal comprising synchronization information for the start time and the duration of the gap between serial signal bursts from the transmitting NTs, the PHY circuitry may interrupt the operation of its signal processing circuitry for the duration of the gap between the serial signal bursts. As a result, the signal processing circuitry maintains its current configuration and therefore does not de-tune. The PHY circuitry is thus shielded from inter-burst-noise. Furthermore, upon re-activation of the signal processing circuitry it allows the signal processing circuitry to re-configure. The signal processing circuitry will be able to reconfigure to the parameters of the newly received serial signal burst fast enough to clean up and recover it correctly. High-speed operation of the PHY circuitry and therefore the serial receiver is enabled.

According to an example embodiment, the control signal further comprises identification of a start of the gap between the respective serial signal bursts. Furthermore, the control signal further comprises identification of a length of the gap between the respective serial signal bursts. The length indication allows indicating the duration of the gap between the serial signal bursts. The PHY circuitry can then use this information, for example, to interrupt the operation of the signal processing circuitry, i.e. its re-configuration, and therefore it shields it from inter-burst-noise. Furthermore, upon re-activation of the signal processing circuitry, it allows the signal processing circuitry to re-configure fast.

According to a further example embodiment, MAC circuitry comprising an electrical output pin configured to output the control signal to the physical layer circuitry. The electrical pin may be an output pin of the PHY circuitry standard interface. For example, the output pin used for signalling a start of burst transmission of a respective ONT may be re-used. This way a modification of the MAC circuitry standard interface is avoided.

The other example embodiments of the first example aspect may further be applied as example embodiments to the second example aspects.

According to a third example aspect, a serial receiver according to claim 7 is disclosed.

According to a fourth example aspect, a method according to claim 9 is disclosed.

The various example embodiments of the first example aspect may further be applied as example embodiments to the third and fourth example aspects.

### Brief Description of the Drawings

Some example embodiments will now be described with reference to the accompanying drawings.
**FIG.1** shows an example of an OLT comprising a physical layer, PHY, circuitry and a medium access control, MAC, circuitry;
**FIG.2** shows a number of plots illustrating the distortion effects on the serial signal bursts received by the OLT of FIG.1;
**FIG.3** shows an example embodiment of an OLT comprising a physical layer, PHY, circuitry and a medium access control, MAC, circuitry, according to the present disclosure;
**FIG.4** shows a number of plots illustrating the distortion effects on the serial signal bursts received by the OLT circuitry of FIG.3; and
**FIG.5** shows an example embodiment of a suitable computing system for performing one or several steps in embodiments of the present disclosure.

### Detailed Description of Embodiment(s)

Serial communication is used in point-to-point communications in which the signal processing module operates in continuous mode where dummy data is transmitted when there is no actual data to be transmitted. The serial signal is however distorted by non-idealities in the serial connections, i.e. the communication channel and/or the electrical connections, which worsen with the increase of the communication speed and/or the length of the serial connections. Depending on the distortions in the received serial signal, the signal processing circuitry adjusts its configuration dynamically to compensate for the non-idealities and thus cleans up and recovers the serial signal.

In point-to-multipoint serial communications, where a central terminal, CT, communicates with multiple network terminals, NTs, the NTs transmit data during specific time intervals with no dummy data transmitted in between. Due to the non-idealities in the serial connections, an uncontrolled noisy signal is observed in the gap between the burst transmissions, i.e. the inter-burst gap. During the inter-burst gap, the signal processing circuitry continues to compensate for the non-idealities in the uncontrolled noisy signal by adjusting its configuration. The signal processing circuitry thus de-tunes as it tries to compensate for the non-idealities in the inter-burst noise. Thus, when a new serial signal burst is received, the signal processing circuitry needs to recover from the de-tuned state fast enough to clean up and recover the received burst.

The problem becomes worse when the transmission intervals are unused by the NTs. The inter-burst gap becomes even longer than a burst transmission time interval. Thus, the signal processing circuitry will de-tune so much that it will not be able to recover on time to clean up and recover the received burst.

Serial burst communication is used, for example, in optical networks. Optical networks, ONs, maybe an active or a passive network, such as a Broadband PON, BPON, an Ethernet PON, EPON, or a Gigabit passive optical network, GPON, according to the ITU-T G.984 standard, a 10x Gigabit passive optical network, 10G-PON, according to the ITU-T G.987 standard or 10G symmetrical XGS-PON according to the ITU-T G.9807 standard and a four-channel 10G symmetrical NG-PON2 according to the ITU-T G989 standard.

In an optical network, ON, an Optical Line Terminal, OLT is coupled to multiple Optical Network Terminals, ONT, in respective optical endpoints via an Optical Distribution Network, ODN. The ODN typically has a tree and branch architecture and comprises optical fibres and passive splitters/combiners that split the optical signals in the downstream directions from the OLT to the ONTs, and, multiplexes the optical signals in the upstream direction from the ONTs to the OLT. The downstream communication from the OLT to the ONTs is performed by broadcasting data for different ONTs in separate timeslots. In the upstream direction, to avoid overlap in transmission from the different NTs, each ONT is assigned a time slot to transmit its data towards the OLT, resulting in a serial burst communication towards the OLT.

The serial signal burst transmitted by the ONTs, typically, comprises a payload data and preamble. The preamble comprises information required by the signal processing circuitry for the correct extraction of the payload data, i.e. the data bitstream, correctly. Thus, to extract the data bitstream without any errors or minimum errors, it is critical that the signal processing circuitry receives the preamble information correctly.

Due to different optical path losses in the ODN and variations in transmitter power of the different ONTs, the signal arriving at the OLT consists of a sequence of bursts with significant amplitude variations and unpredictable phase from one burst to the next. Further, in high-speed optical networks, for example, 25 Gbit/s and 50 Gbit/s passive optical networks, the transmission rate of the bursts is further limited by the significant chromatic dispersion which creates Inter-Symbol Interference, ISI.

To mitigate the effects of amplitude variations and unpredictable phase of the received upstream bursts as well as the effects of Inter-Symbol Interference, ISI, resulting from chromatic dispersion, a burst-mode electronic distortion (or dispersion) compensation is applied in the physical layer, PHY, circuitry. The burst-mode distortion compensation is performed by the signal processing circuitry of the PHY circuitry which needs to determine a different configuration for compensating the distortions in the burst transmissions from the different ONTs in the optical network. To do so, the ONTs transmit a preamble sequence followed by the payload data, i.e. the actual transmitted data. The preamble sequence comprises information based on which the signal processing circuitry adjusts its configuration so that correct reception of the burst and therefore the payload data is assured.

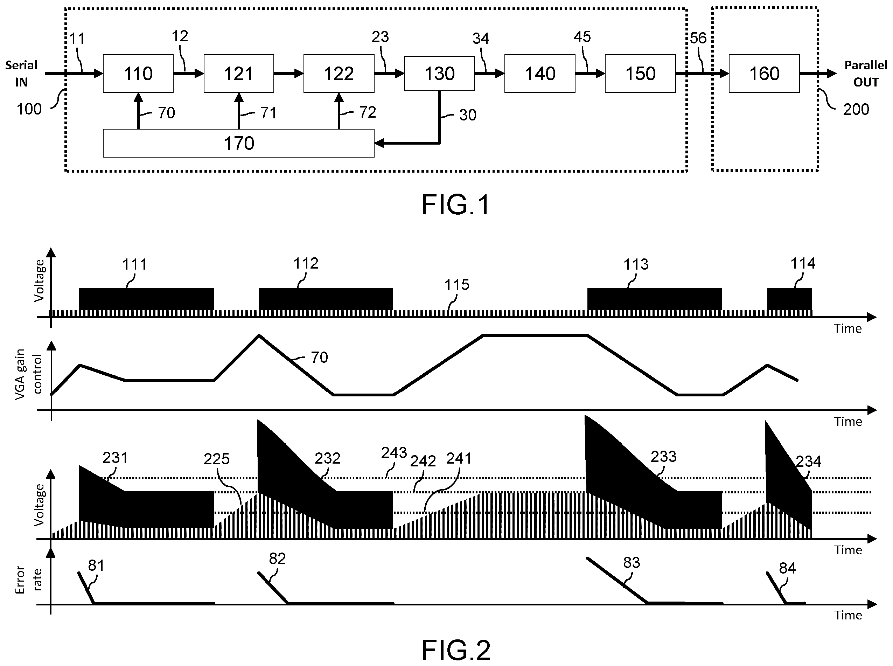

The operation of the optical serial receiver, i.e. the OLT, will be explained below with reference to FIG.1 and FIG.2.

FIG.1 shows an example of an Optical Line Terminal, OLT, comprising a physical, PHY, circuitry 100 and a medium access control, MAC, circuitry 200. The PHY circuitry implements the Physical Media Dependent, PMD, layer functionalities. The PHY circuity comprises a signal processing circuitry and some additional processing modules such as a de-serializer 140 and a decoder 150 and a control circuitry 170. In this example, the signal processing circuitry comprises an amplification circuitry 110, an equalization, EQ, circuitry 121 and 122, a clock and data recovery, CDR, circuitry 130 connected in series.

The amplification, AMP, circuitry 110 comprises an automatic gain control and is typically referred to as a variable gain amplifier, VGA. The VGA amplifies the received serial signal bursts 11 to pre-defined target amplitude level 242 to facilitate the signal recovering. The amplified serial signal bursts 12 are then fed to the EQ circuitry 121,122 for cancelling out the frequency-dependent attenuation while preserving the waveform of the signal.

By equalizing the received serial signal bursts, the EQ circuitry compensates for burst-mode distortions and thus for any inter-symbol interference in the bursts. The EQ circuitry may comprise an analog equalizer 121 and a digital equalizer 122 each comprising one or more filters to cancel out the frequency-dependent attenuation. The analog equalizer 121 typically cancels out the linear frequency-dependent attenuation, while the digital equalizer 122 cancels out the Inter Symbol Interference, ISI.

The equalized serial signal bursts 23 are then fed to the CDR circuitry 130 which generates, based on information extracted from the burst, a local clock 30 synchronized in frequency and phase with the respective information. The generated local clock 30 is then used to clock to the control circuitry 170 and therefore the VGA 110 and EQ 121 and 122 circuitries during the reception of the payload data so that the payload data is extracted correctly from the respective burst. Based on the local clock signal 30, the control circuitry 170 generates the control signals 70, 71 and 72 to respectively control the operation of the AMP 110, EQ 121-122 circuitries. For example, the control signal 70 controls the gain point of the VGA 110, the control signal 71 controls the configuration of the analog EQ circuitry 121 and the control signal 72 controls the configuration of the digital EQ circuitry 122. As a result, the signal 34 at the output of the CDR circuitry 130 contains the data bitstream extracted from the payload data. The extracted data bitstream is then de-serialized into a bit set 45 by the de-serializer 140 and finally decoded by the decoder 150.

The MAC circuitry 200 implements the medium access control, MAC, layer functionalities and comprises a data packet handling circuitry 160 and other signal processing modules (not shown in the figure). The decoded data 56 by the decoder 150 is fed to the MAC circuitry 200 and more in particular to the data packet handling circuitry 160 for further processing. The data packet handling circuitry 160 comprises the MAC logic circuitry (not shown in the figure) which determines the burst allocation map which indicates the specific start time and duration of the upstream burst transmission of the transmitting ONTs in the optical network.

FIG.2 shows four plots illustrating the received serial signal bursts 111-114, the configuration 70 of the VGA gain evolving over time, the equalized serial signal bursts 231-234 and the error rate 81-84 for the respective serial signal bursts, respectively. The serial signal bursts 111-114 may be short or long. For example, a burst may be 125 µsec or a few µsec long. The signal burst plots further illustrate the noise level 115 and 225 at the input of the AMP circuitry 110 and the output of the VGA circuitry 110, respectively. As it can be seen, at the inter-burst gap, the signal processing circuitry, i.e. the AMP 110, the EQ 121-122 and the CDR 130 circuitries, tries to clean up and recover the data bitstream from the noisy signal. The noisy signal is thus treated as a valid signal. Thus, to compensate for the low amplitude level, the gain point 70 of the AMP 110 gradually increases until the amplitude of the received inter-burst noise level 225 reaches the pre-defined target level 242. Similarly, the EQ circuitry 121-122 tries to compensate for the frequency-dependent attenuation and the CDR circuitry 130 tries to lock the local clock to the embedded clock information in the inter-burst noise. Thus, upon receipt of the next serial signal burst, these circuitries are so much de-tuned that it takes a long time for them to recover. For example, the gain point 70 of the AMP is so high that the burst is amplified to a level above the maximum error-free level 243 until the VGA 110 corrects its gain point accordingly. This leads to clipping of amplitude of the serial signal bursts and therefore to the corruption of the received data. The EQ circuitry 121-122 is also overcompensating for the frequency-dependent attenuation and hence distorts the serial signal burst. Similarly, the CDR circuitry 130 is also de-tuned as it is trying to track the edges in the inter-burst noise and thus needs time to lock to the clock information embedded in the preamble of next serial signal burst. However, the CDR 130 will lock to the embedded clock information only if the preamble is correctly processed by the AMP 110 and the EQ circuitry 121-122. As a result, the serial signal bursts are received with significant error rates 81-84. In this example, up to half of the burst transmission contains errors which may be even worse as the CDR circuity 130 may de-tuned completely while trying to track the edges in the inter-burst noise. In practice, this means that bursts irrespective of their length will be lost. In other words, it will not be possible to derive the data bitstream from the payload data with an acceptable amount of errors.

As described above, the problem worsens with the higher speeds and/or longer distances of the serial connections. For example, if the duration of the inter-burst gap is in the same or similar range as the time for a circuit to recover from its de-tuned state, i.e. tens of µsec up to hundreds of µsec, than the circuitry processing circuitry will not be able to receive the entire burst.

According to the present disclosure, the operation of the signal processing circuitry is interrupted for the duration of the inter-burst gap to allow the signal processing circuitry to adapt its configuration fast enough to receive the preamble correctly and hence the payload data of the respective serial signal burst. The signal processing circuitry does not de-tune during the inter-burst gap but maintains its configuration. This enables high-speed operation of the PHY circuitry and therefore the serial receiver. For this purpose, the MAC circuitry is configured to generate, based on the burst allocation map, a control signal comprising information of the start time and the duration of the gap between the serial signal bursts from the transmitting ONTs. The data packet handling circuitry of the MAC circuitry is thus configured to output the control signal to the PHY circuitry. This way the PHY circuitry is notified of the start and the duration of the inter-burst gap which is then used to interrupt the operation of the signal processing circuitry.

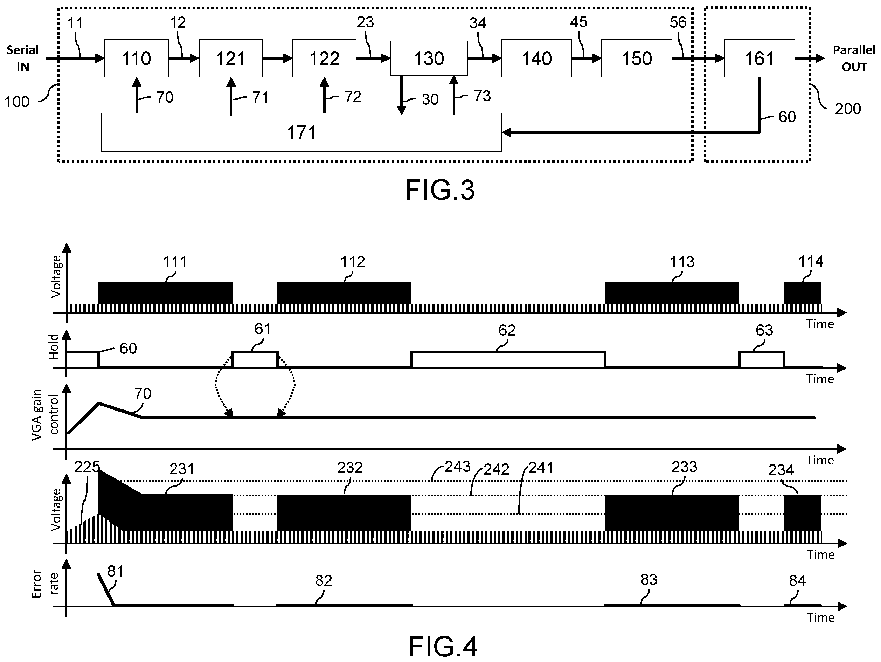

Various example embodiments will be described in detail below with reference to FIG.3 and FIG.4.

FIG.3 shows an example embodiment of an OLT according to the present disclosure comprising a PHY circuitry 100 and a MAC circuitry 200. The parts of the PHY 100 and the MAC 200 circuitries which are identical to those shown in FIG.1 are denoted by identical reference signs.

FIG.4 shows the same four plots of FIG.3, i.e. the received serial signal bursts 111-114, the configuration 70 of the VGA gain evolving over time, the equalized serial signal bursts 231-234 and the error rate 81-84 for the respective serial signal bursts, respectively. FIG.4 shows an additional plot illustrating the control signal 60 provided by the MAC circuitry 200.

The OLT of FIG.3 includes in addition to the OLT of FIG.1, a data packet handling circuitry 161 configured to output a control signal 60 and a control circuitry 171 configured to receive the control signal 60.

In addition to the functionality of the MAC circuitry 200 already described above with reference to FIG.1, the data packet handling circuitry 161 is configured to generate a control signal 60 which controls the operation of the PHY circuitry 100. The control signal 60 comprises synchronization information indicating a gap between the burst transmissions from the transmitting ONTs. This synchronization information is derived based on the burst allocation map which is determined by the MAC logic circuitry which has knowledge of the specific start time and duration of the burst transmission of the transmitting ONTs in the optical network.

The control circuitry 171 controls the operation of the PHY circuitry in accordance with the received control signal 60. The functionality of the control circuitry 171 and the operation of the PHY circuitry will be explained in more detail below.

The control circuitry 171 receives the control signal 60 and the decoder of the control circuitry 171 decodes the synchronization information comprising the start time and the length of the inter-burst gap. Accordingly, the control circuitry 171 outputs control signals 70, 71, 72 and 73 comprising information for controlling the operation of the processing modules 110, 121-122 and 130, i.e. the gain point of the VGA circuitry 110, the adaptation of the EQ circuitry 121 and 122 configurations and the locking of the local clock generated by the CDR circuitry 130. Herein, however, the control information does not change during the inter-burst gap. The control signal 70 thus maintains the gain point of the VAG circuitry 110 unchanged during the inter-burst gap. The control signal 71 maintains the equalization configuration of the analog EQ circuitry 121 unchanged during the inter-burst gap and the control signal 72 maintains the configuration of the digital EQ circuitry 122. Similarly, the control signal 73 maintains the state of the CDR circuitry, i.e. its phase and frequency, unchanged during the inter-burst gap. Thus, upon reception of a new serial signal burst, the processing circuitries are able to quickly adjust to the properties of the newly received serial signal burst and thus clean up and recover the burst correctly.

Moreover, the processing circuitries will be able to reconfigure to the parameters of the newly received serial signal burst fast enough to receive the preamble correctly. Therefore, the data bitstream will be recovered with a zero error rate from the payload data. Furthermore, loss of bandwidth may be prevented as the serial signal burst transmissions from the NTs may be dedicated towards more data reception rather than to long preamble sequences.

Although the operation of the signal processing modules is controlled by the control signals 70, 71, 72 and 73 the first serial signal burst 111 after the start-up of the serial receiver, i.e. OLT, may be received with errors as the processing modules needs to configure appropriately to the properties of the first serial signal burst 111. The first burst 111 is thus received with errors and the error rate 81 for the first burst is non-zero. In the alternative case when the processing modules are operational until the receipt of the first serial signal burst 111, the AMP 110, the EQ 121 and 122 and the CDR circuitry 130 will be de-tuned due to the inter-burst noise 225. Upon receipt of the first serial signal burst 111, the processing modules 110, 121-122 and 130 will adjust their configuration accordingly. Herein again the error rate 81 for the first burst will be non-zero. However, in both cases, after the receipt of the first serial signal burst 111, the control circuitry 171 will interrupt the operation of the processing modules 110,121-122 and 130 during the gap between the subsequent serial signal bursts, resulting in zero error rates. For example, the error rates for the second, third and fourth burst 82, 83, and 84 are all zero.

According to example embodiments, the circuitry may be configured to interrupt the operation of the processing modules based on their respective processing delays. For example, the AMP circuitry 110 may be interrupted immediately upon receipt of the start of the inter-burst gap, while the EQ circuitry 121-122 and the CDR circuitry 130 may be interrupted after a specific period of time equivalent to the processing delay of the AMP circuitry 110. In other words, the operation of the processing modules may be sequentially interrupted. This way the various processing module may be interrupted once they have completed the processing of the burst. Similarly, the processing delay of the processing modules may be taken into account when resuming the operation of the respective processing modules. For example, a processing module may resume operation when the newly received burst has been processed by the preceding processing modules. This further minimizes the settling tome of the respective processing modules. This way the control circuitry 171 may interrupt their operation in a more controlled manner.

The control signal 60 may comprise bitstreams 61, 62 and 63 indicating the inter-burst gap between the respective bursts. The bitstreams may comprise bits set to a high logical value, wherein the first bit of the respective bitstream indicates a start of the inter-burst gap and the remaining bits its length. Other bitstream configurations are possible. For example, the first bit of the bitstream, e.g. a high logical value, may indicate the start of the inter-burst gap while the remaining bits of the bitstream, e.g. a combination of bits set to a high and low logical value, may encode the length of the gap. The number of bits required for encoding the length information depends on the number of transmitting NTs in the network and on the frequency of burst transmissions. For example, seven bits may be enough for the encoding of the length of the gap between respective serial signal bursts. Further, both the start time and the duration of the inter-burst gap may be encoded in the bitstream. This allows taking into account the processing delay of the decoder. For example, the first few bits may encode the start time and the remaining bits the duration of the inter-burst gap.

The control circuitry 171 may be further configured to interrupt other signal processing circuitries, for example for analysing the performance of the PHY circuitry 100. An example of such circuitry is the eye monitor. An eye monitor may be connected in parallel to the signal processing modules, i.e. in parallel to the AMP 110, EQ 121-122 and CDR 130 circuitry. By interrupting the operation of the eye monitor during the inter-burst gap, the eye monitor is able to provide a better assessment of the PHY circuitry performance as the inter-burst noise is not shown.

In case the PHY circuitry 100 and MAC circuitry 200 are implemented in different chips, the control signal 60 is outputted by the MAC circuitry 200 via its input/output interface. The input/output interface comprises an electrical output pin configured to output the control signal 60 to the PHY circuitry 100. Similarly, the PHY circuitry 100 is configured to receive the control signal 60 via its input/output interface which comprises an electrical input pin configured to receive the control signal 60.

In summary, the present disclosure enables error-free, high-speed serial burst operation for serial receivers irrespective of the communication standard they use. For example, serial receivers may operate using high-speed serial transmission standards, such as Ethernet, High-Definition Multimedia Interface, HDMI, Universal Serial Bus, USB, Serial Advanced Technology Attachment, SATA, Common Public Radio Interface, CPRI, and many more.

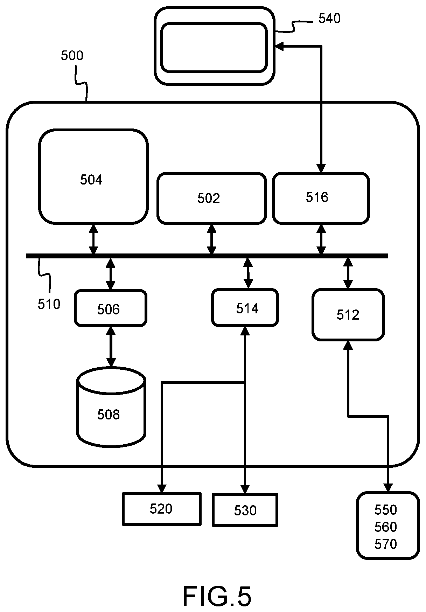

FIG.5 shows a computing system 500 suitable for performing various steps performed by a serial receiver in a communication network, such as OLT, according to various embodiments of the present disclosure. Computing system 500 may, in general, be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory, RAM, or another type of dynamic storage device that stores information and instructions for execution by processor 502 and/or a read-only memory, ROM, or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 550, 560, 570. The communication interface 512 of computing system 500 may be connected to such another computing system by means of a local area network, LAN, or a wide area network, WAN, such as for example the internet. Storage element interface 706 may comprise a storage interface such as for example a Serial Advanced Technology Attachment, SATA, interface or a Small Computer System Interface, SCSI, for connecting bus 510 to one or more storage elements 508, such as one or more local disks, for example, SATA disk drives, and control the reading and writing of data to and/or from these storage elements 708. Although the storage element(s) 508 above is/are described as a local disk, in general, any other suitable computer-readable media such as a removable magnetic disk, optical storage media such as a CD or DVD, -ROM disk, solid-state drives, flash memory cards, ... could be used.

According to the present disclosure, the communication interface 512 allows the serial receiver, i.e. the OLT, according to various embodiments of the present disclosure to exchange control information and data with the optical network terminals, ONTs, 550, another OLT 560 or other circuitries 570 in the communication network. According to the example embodiments, the processor may be running a computer program code that allows the OLT to control the operation of its PHY circuitry 100 in accordance with the burst allocation map determined by its respective MAC circuitry 200. The processing is therefore configured to control the operation of its control circuit 171 which in turn controls the operation of its signal processing circuitry, i.e. its amplification 110, EQ 121-122 and CDR 130 circuitries. More specifically, during operation the MAC circuitry 200 may receive, via the communication interface 512, information from the ONTs relating to their serial number, their status, etc, based on which the processor may determine a burst allocation map. The processor will then instruct the received information as well as the determined burst allocation map to be stored in the memory 504. Based on the burst allocation map, the processor 502 will issue a control signal 60 comprising synchronization information with which it will instruct the OLT circuitry and more specifically, its PHY circuitry 100, to interrupt its signal processing circuitry after the reception of signal burst and until the reception of the next signal burst from a respective ONT.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a server, to perform various functions) and
(c) hardware circuit(s) and/or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example, and if applicable to the particular claim element, a baseband integrated circuit or processor integrated circuit for a mobile device or a similar integrated circuit in a server, a cellular network device, or other computing or network device.

Although the present disclosure has been illustrated by reference to specific embodiments, it will be apparent to those skilled in the art that the present disclosure is not limited to the details of the foregoing illustrative embodiments, and that the present disclosure may be embodied with various changes and modifications without departing from the scope thereof. The present embodiments are therefore to be considered in all respects as illustrative and not restrictive, the scope of the present disclosure being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the present disclosure are capable of operating according to the present disclosure in other sequences, or in orientations different from the one(s) described or illustrated above.

## Claims

1. A physical layer, PHY, circuitry (100) configured to receive serial signal bursts from respective network terminals, NTs, and comprising a signal processing circuitry (110,121-122,130) configured to derive data bitstreams from the respective serial signal bursts,
wherein the PHY circuitry (100) is further configured to receive a control signal (60) from a medium access control, MAC, circuitry (200) and wherein the control signal (60) comprises information indicative for a gap between the respective serial signal bursts and wherein the PHY circuitry (100) is configured to interrupt the operation of the signal processing circuitry (110,121-122,130) in accordance with the information;
and wherein the control signal (60) comprises a bitstream and wherein a start and length of the bitstream are indicative for the start and the length of the gap between the respective serial signal bursts;
and wherein the PHY circuitry (100) further comprises a circuitry (170) configured to decode the start and the length of the gap between the respective serial signal bursts from the bitstream, and to interrupt the operation of the signal processing circuitry (110,121-122,130) based on the start of the bitstream and for a duration of the length of the bitstream;
and wherein the signal processing circuitry comprises a plurality of interconnected processing modules (110,121-122,130), and, wherein the circuitry (170) is configured to interrupt the operation of one or more of the processing modules (110,121-122,130) in accordance with the information;
and wherein the circuitry (170) is further configured to interrupt the operation of a respective processing module based on processing delays of the respective processing modules.

2. The physical layer, PHY, circuitry (100) according to claim 1, wherein the control signal (60) is a synchronization signal for indicating a start of the gap between the respective serial signal bursts.

3. The physical layer, PHY, circuitry (100) according to claim 1 or 2, wherein the control signal (60) comprises a length information indicative for a length of a gap between the respective serial signal bursts.

4. The physical layer, PHY, circuitry (100) according to claim 1, wherein the processing modules are at least one of: a variable gain amplifier, VGA, (110), an equalization, EQ, circuitry (121,122) and a clock and data recovery, CDR, (130).

5. The physical layer, PHY, circuitry (100) according to any of the preceding claims, wherein the serial signal bursts are upstream optical signal bursts and wherein the NTs are optical network terminals, ONTs.

6. A medium access control, MAC, circuitry (200) configured to determine a burst allocation map for network terminals, NTs,
wherein the MAC (200) is further configured to generate a control signal (60) for a physical layer, PHY, circuitry (100) according to any one of the claims 1 to 5 and wherein the control signal (60) comprises information indicative for a gap between serial signal bursts from transmitting NTs based on the burst allocation map;
and wherein the control signal (60) comprises a bitstream and wherein a start and length of the bitstream are indicative for the start and the length of the gap between the respective serial signal bursts.

7. A serial receiver comprising a PHY circuitry (100) according to any of claims 1 to 5 and a MAC, circuitry (200) according to claim 6.

8. The serial receiver according to claim 7, wherein the serial receiver is an optical line terminal, OLT.

9. A method comprising:
determining by a medium access control, MAC, circuitry (200), based on a burst allocation map, a gap between serial signal bursts of transmitting network terminals, NTs, and sending a control signal comprising information indicative for the gap between serial signal bursts of the transmitting NTs to a physical layer, PHY, circuitry (100); and wherein the control signal (60) comprises a bitstream and wherein a start and length of the bitstream are indicative for the start and the length of the gap between the respective serial signal bursts
- receiving by the physical layer, PHY, circuitry (100), the control signal (60) and interrupting the operation of a signal processing circuitry (110,121-122,130) based on the information;
- and wherein the interrupting further comprises decoding the start and the length of the gap between the respective serial signal bursts from the bitstream, interrupting the operation of the signal processing circuitry (110,121-122,130) based on the start of the bitstream and for a duration of the length of the bitstream by interrupting the operation of respective processing modules based on processing delays of the respective processing modules.

## Patentansprüche

1. Schaltung (100) einer physischen Schicht, PHY, die dazu ausgelegt ist, serielle Signalbursts von jeweiligen Netzwerkendgeräten, NTs, zu empfangen, und eine Signalverarbeitungsschaltung (110,121-122,130) umfasst, die dazu ausgelegt ist, Datenbitströme von den jeweiligen seriellen Signalbursts abzuleiten,
wobei die PHY-Schaltung (100) ferner dazu ausgelegt ist, ein Steuersignal (60) von einer Medienzugangssteuerungs(MAC)-Schaltung (200) zu empfangen, und wobei das Steuersignal (60) Informationen umfasst, die eine Lücke zwischen den jeweiligen seriellen Signalbursts anzeigen, und wobei die PHY-Schaltung (100) dazu ausgelegt ist, den Betrieb der Signalverarbeitungsschaltung (110,121-122,130) gemäß den Informationen zu unterbrechen;
und wobei das Steuersignal (60) einen Bitstrom umfasst und wobei ein Anfang und eine Länge des Bitstroms den Anfang und die Länge der Lücke zwischen den jeweiligen seriellen Signalbursts anzeigen;
und wobei die PHY-Schaltung (100) ferner eine Schaltung (170) umfasst, die dazu ausgelegt ist, den Anfang und die Länge der Lücke zwischen den jeweiligen seriellen Signalbursts aus dem Bitstrom zu decodieren und den Betrieb der Signalverarbeitungsschaltung (110,121-122,130) auf Basis des Anfangs des Bitstroms für eine Dauer der Länge des Bitstroms zu unterbrechen;
und wobei die Signalverarbeitungsschaltung eine Vielzahl von miteinander verbundenen Verarbeitungsmodulen (110, 121-122, 130) umfasst, und wobei die Schaltung (170) dazu ausgelegt ist, den Betrieb von einem oder mehreren der Verarbeitungsmodule (110, 121-122, 130) gemäß den Informationen zu unterbrechen;
und wobei die Schaltung (170) ferner dazu ausgelegt ist, den Betrieb eines jeweiligen Verarbeitungsmoduls auf Basis von Verarbeitungsverzögerungen der jeweiligen Verarbeitungsmodule zu unterbrechen.

2. Schaltung (100) der physischen Schicht, PHY, nach Anspruch 1, wobei das Steuersignal (60) ein Synchronisationssignal zum Anzeigen eines Anfangs der Lücke zwischen den jeweiligen seriellen Signalbursts ist.

3. Schaltung (100) der physischen Schicht, PHY, nach Anspruch 1 oder 2, wobei das Steuersignal (60) Längeninformationen umfasst, die eine Länge einer Lücke zwischen den jeweiligen seriellen Signalbursts anzeigen.

4. Schaltung (100) der physischen Schicht, PHY, nach Anspruch 1, wobei die Verarbeitungsmodule mindestens eines von Folgendem sind: einem variablen Verstärkungsverstärker, VGA, (110), einer Entzerrungs(EQ)-Schaltung (121, 122) und einer Takt- und Datenwiederherstellung, CDR, (130).

5. Schaltung (100) der physischen Schicht, PHY, nach einem der vorhergehenden Ansprüche, wobei die seriellen Signalbursts optische Upstreamsignalbursts sind und wobei die NTs optische Netzwerkendgeräte, ONTs, sind.

6. Medienzugangssteuerungs (MAC) -Schaltung (200), die dazu ausgelegt ist, eine Burstzuteilungskarte für Netzwerkendgeräte, NTs, zu bestimmen,
wobei die MAC (200) ferner dazu ausgelegt ist, ein Steuersignal (60) für eine Schaltung (100) der physischen Schicht, PHY, nach einem der Ansprüche 1 bis 5 zu erzeugen, und wobei das Steuersignal (60) Informationen umfasst, die eine Lücke zwischen seriellen Signalbursts von übertragenden NTs auf Basis der Burstzuteilungskarte anzeigen;
und wobei das Steuersignal (60) einen Bitstrom umfasst und wobei ein Anfang und eine Länge des Bitstroms den Anfang und die Länge der Lücke zwischen den jeweiligen seriellen Signalbursts anzeigen.

7. Serieller Empfänger, der eine PHY-Schaltung (100) nach einem der Ansprüche 1 bis 5 und eine MAC-Schaltung (200) nach Anspruch 6 umfasst.

8. Serieller Empfänger nach Anspruch 7, wobei der serielle Empfänger ein optisches Leitungsendgerät, OLT, ist.

9. Verfahren, das Folgendes umfasst:
- Bestimmen einer Lücke zwischen seriellen Signalbursts von übertragenden Netzwerkendgeräten, NTs, durch eine Medienzugangssteuerungs(MAC)-Schaltung (200) auf Basis einer Burstzuteilungskarte und Senden eines Steuersignals, das Informationen umfasst, die die Lücke zwischen seriellen Signalbursts der übertragenden NTs anzeigen, an eine Schaltung (100) einer physischen Schicht, PHY; und wobei das Steuersignal (60) einen Bitstrom umfasst und wobei ein Anfang und eine Länge des Bitstroms den Anfang und die Länge der Lücke zwischen den jeweiligen seriellen Signalbursts anzeigen
- Empfangen des Steuersignals (60) und Unterbrechen des Betriebs einer Signalverarbeitungsschaltung (110, 121-122, 130) auf Basis der Informationen durch die Schaltung (100) der physischen Schicht, PHY;
- und wobei das Unterbrechen ferner das Decodieren des Anfangs und der Länge der Lücke zwischen den jeweiligen seriellen Signalbursts aus dem Bitstrom, das Unterbrechen des Betriebs der Signalverarbeitungsschaltung (110, 121-122, 130) auf Basis des Anfangs des Bitstroms und für eine Dauer der Länge des Bitstroms durch Unterbrechen des Betriebs von jeweiligen Verarbeitungsmodulen auf Basis von Verarbeitungsverzögerungen der jeweiligen Verarbeitungsmodulen umfasst.

## Revendications

1. Ensemble de circuits de couche physique, PHY, (100) configuré pour recevoir des salves de signaux séries de terminaux de réseau, NT, respectifs et comprenant un ensemble de circuits de traitement de signaux (110, 121-122, 130) configuré pour dériver des trains de bits de données à partir des salves de signaux séries respectives,
dans lequel l'ensemble de circuits PHY (100) est en outre configuré pour recevoir un signal de commande (60) d'un ensemble de circuits de commande d'accès au support, MAC, (200), et dans lequel le signal de commande (60) comprend des informations indiquant un intervalle entre les salves de signaux séries respectives, et dans lequel l'ensemble de circuits PHY (100) est configuré pour interrompre le fonctionnement de l'ensemble de circuits de traitement de signaux (110, 121-122, 130) conformément aux informations ;
et dans lequel le signal de commande (60) comprend un train de bits, et dans lequel un début et une longueur du train de bits indiquent le début et la longueur de l'intervalle entre les salves de signaux séries respectives ;
et dans lequel l'ensemble de circuits PHY (100) comprend en outre un ensemble de circuits (170) configuré pour décoder le début et la longueur de l'intervalle entre les salves de signaux séries respectives à partir du train de bits, et pour interrompre le fonctionnement de l'ensemble de circuits de traitement de signaux (110, 121-122, 130) sur la base du début du train de bits et pendant la durée de la longueur du train de bits ;
et dans lequel l'ensemble de circuits de traitement de signaux comprend une pluralité de modules de traitement (110, 121-122, 130) interconnectés, et dans lequel l'ensemble de circuits (170) est configuré pour interrompre le fonctionnement d'un ou plusieurs des modules de traitement (110, 121-122, 130) conformément aux informations ;
et dans lequel l'ensemble de circuits (170) est en outre configuré pour interrompre le fonctionnement d'un module de traitement respectif sur la base de retards de traitement des modules de traitement respectifs.

2. Ensemble de circuits de couche physique, PHY, (100) selon la revendication 1, dans lequel le signal de commande (60) est un signal de synchronisation pour indiquer un début de l'intervalle entre les salves de signaux séries respectives.

3. Ensemble de circuits de couche physique, PHY, (100) selon la revendication 1 ou 2, dans lequel le signal de commande (60) comprend des informations de longueur indiquant une longueur d'un intervalle entre les salves de signaux séries respectives.

4. Ensemble de circuits de couche physique, PHY, (100) selon la revendication 1, dans lequel les modules de traitement sont au moins l'un parmi : un amplificateur à gain variable, VGA, (110), un ensemble de circuits d'égalisation, EQ, (121, 122) et une récupération d'horloge et de données, CDR, (130).

5. Ensemble de circuits de couche physique, PHY, (100) selon l'une des revendications précédentes, dans lequel les salves de signaux séries sont des salves de signaux optiques en amont, et dans lequel les NT sont des terminaux de réseau optiques, ONT.

6. Ensemble de circuits de commande d'accès au support, MAC, (200) configuré pour déterminer une carte d'allocation de salves pour des terminaux de réseau, NT,
dans lequel le MAC (200) est en outre configuré pour générer un signal de commande (60) pour un ensemble de circuits de couche physique, PHY, (100) selon l'une des revendications 1 à 5, et dans lequel le signal de commande (60) comprend des informations indiquant un intervalle entre les salves de signaux séries provenant des NT de transmission sur la base de la carte d'allocation de salves ;
et dans lequel le signal de commande (60) comprend un train de bits, et dans lequel un début et une longueur du train de bits indiquent le début et la longueur de l'intervalle entre les salves de signaux séries respectives.

7. Récepteur série comprenant un ensemble de circuits PHY (100) selon l'une des revendications 1 à 5 et un ensemble de circuits MAC (200) selon la revendication 6.

8. Récepteur série selon la revendication 7, dans lequel le récepteur série est un terminal de ligne optique, OLT.

9. Procédé comprenant les étapes suivantes :
- déterminer par un ensemble de circuits de commande d'accès au support, MAC, (200), sur la base d'une carte d'allocation de salves, un intervalle entre les salves de signaux séries de terminaux de réseau, NT, de transmission, et envoyer un signal de commande comprenant des informations indiquant l'intervalle entre les salves de signaux séries des NT de transmission à un ensemble de circuits de couche physique, PHY, (100) ; et dans lequel le signal de commande (60) comprend un train de bits, et dans lequel un début et une longueur du train de bits indiquent le début et la longueur de l'intervalle entre les salves de signaux séries respectives ;
- recevoir par l'ensemble de circuits de couche physique, PHY, (100) le signal de commande (60), et interrompre le fonctionnement d'un ensemble de circuits de traitement de signaux (110, 121-122, 130) sur la base des informations ;
- et dans lequel l'interruption comprend en outre le décodage du début et de la longueur de l'intervalle entre les salves de signaux séries respectives à partir du train de bits, l'interruption du fonctionnement de l'ensemble de circuits de traitement de signaux (110, 121-122, 130) sur la base du début du train de bits et pendant la durée de la longueur du train de bits en interrompant les modules de traitement respectifs sur la base de retards de traitement des modules de traitement respectifs.
